(19) Europäisches Patentamt / European Patent Office / Office européen des brevets

(11) EP 4 362 157 A1

(12) EUROPEAN PATENT APPLICATION

(43) Date of publication:
**01.05.2024 Bulletin 2024/18**

(21) Application number: **23199020.1**

(22) Date of filing: **22.09.2023**

(51) International Patent Classification (IPC):
***H01M 10/0525*** (2010.01) ***H01M 4/58*** (2010.01)
***H01M 10/0568*** (2010.01) ***H01M 10/0569*** (2010.01)
***H01M 4/525*** (2010.01)

(52) Cooperative Patent Classification (CPC):
**H01M 4/525; H01M 10/0525; H01M 10/0568; H01M 10/0569**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 KR 20220143041**

(71) Applicant: **SK On Co., Ltd.**
**Seoul 03161 (KR)**

(72) Inventors:
- **PARK, Young Uk**
  **34124 Daejeon (KR)**
- **CHO, In Haeng**
  **34124 Daejeon (KR)**
- **KIM, Seung Hyun**
  **34124 Daejeon (KR)**
- **PARK, Ki Sung**
  **34124 Daejeon (KR)**
- **PARK, Min Woo**
  **34124 Daejeon (KR)**
- **PARK, Seon Yeong**
  **34124 Daejeon (KR)**
- **CHO, Yong Hyun**
  **34124 Daejeon (KR)**

(74) Representative: **Stolmár & Partner Patentanwälte PartG mbB**
**Blumenstraße 17**
**80331 München (DE)**

# (54) LITHIUM SECONDARY BATTERY

(57) A lithium secondary battery includes a cathode including a cathode active material that contains lithium metal oxide particles, an anode facing the cathode, and a non-aqueous electrolyte solution including a non-aqueous organic solvent that contains a fluorine-based organic solvent and a lithium salt. A ratio of the number of moles of lithium contained in each of the lithium metal oxide particles to the total number of moles of metals excluding lithium contained in each of the lithium metal oxide particles is 1.05 or more. A content of the fluorine-based organic solvent is in a range from 5 vol% to 60 vol% based on a total volume of the non-aqueous organic solvent.

FIG. 1

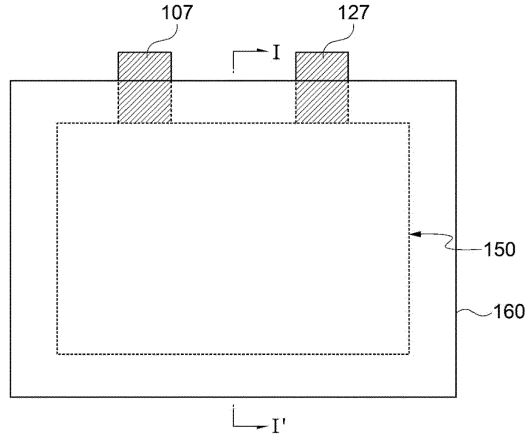


EP 4 362 157 A1

## Description

BACKGROUND

1. Field

The disclosure of this patent document relates to a lithium secondary battery.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile, a hybrid vehicle, etc.

A lithium secondary battery is actively developed and applied due to high operational voltage and energy density per unit weight, a high charging rate, a compact dimension, etc.

For example, the lithium secondary battery may include an electrode assembly including a cathode, an anode and a separation layer interposed between the cathode and the anode, and an electrolyte immersing the electrode assembly. The lithium secondary battery may further include an exterior material in the form of, e.g., a pouch, that accommodates the electrode assembly and the electrolyte.

A cathode active material of the lithium secondary battery may include an over-lithiated cathode active material in which lithium is also present in a transition metal layer of a layered structure.

The over-lithiated cathode active material has high capacity properties, but requires a high voltage operation to degrade life-span properties.

SUMMARY

According to an aspect of the present disclosure, there is provided a lithium secondary battery having improved capacity property and operational stability.

A lithium secondary battery includes a cathode including a cathode active material that contains lithium metal oxide particles, an anode facing the cathode, and a non-aqueous electrolyte solution including a non-aqueous organic solvent that contains a fluorine-based organic solvent, and a lithium salt. A ratio of the number of moles of lithium contained in each of the lithium metal oxide particles relative to the total number of moles of metals excluding lithium contained in each of the lithium metal oxide particles is 1.05 or more. A content of the fluorine-based organic solvent is in a range from 5 vol% to 60 vol% based on a total volume of the non-aqueous organic solvent.

In some embodiments, the fluorine-based organic solvent may include at least one selected from the group consisting of a difluoro-based organic solvent and a trifluoro-based organic solvent.

In some embodiments, the difluoro-based organic solvent may be represented by Chemical Formula 2.

[Chemical Formula 2]

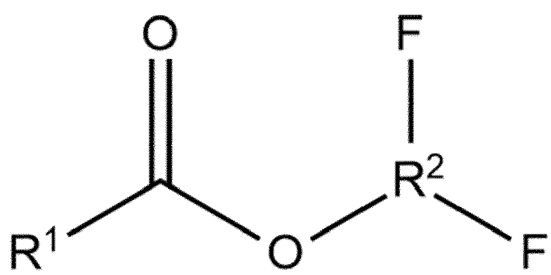

In Chemical Formula 2, $R^1$ represents a hydrocarbon containing a $C_1$-$C_6$ alkyl group or a $C_6$-$C_{12}$ aryl group, and $R^2$ represents a hydrocarbon containing a $C_1$-$C_6$ alkyl group or a $C_1$-$C_6$ alkenyl group.

In some embodiments, the difluoro-based organic solvent may include 2,2-difluoroethyl acetate.

In some embodiments, the trifluoro-based organic solvent may be represented by Chemical Formula 3.

[Chemical Formula 3]

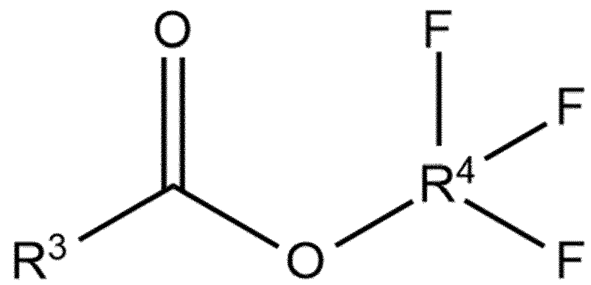

In Chemical Formula 3, $R^3$ represents a hydrocarbon containing a $C_1$-$C_6$ alkyl group or a $C_6$-$C_{12}$ aryl group, and $R^4$ represents a hydrocarbon containing a $C_1$-$C_6$ alkyl group or a $C_1$-$C_6$ alkenyl group.

In some embodiments, the trifluoro-based organic solvent may include 2,2,2-trifluoroethyl acetate.

In some embodiments, the lithium salt may include at least one selected from the group consisting of lithium tetrafluoroborate ($LiBF_4$), lithium hexafluorophosphate ($LiPF_6$) and lithium difluorophosphate ($LiPO_2F_2$).

In some embodiments, a total content of fluoroethylene carbonate and ethylene carbonate contained in the non-aqueous organic solvent is 5 vol% or less based on a total volume of the non-aqueous organic solvent.

In some embodiments, the content of the fluorine-based organic solvent may be in a range from 20 vol% to 40 vol% based on the total volume of the non-aqueous organic solvent.

In some embodiments, the lithium metal oxide particles may be represented by Chemical Formula 1.

[Chemical Formula 1] $Li_a[M_xNi_yMn_z]O_b$

In Chemical Formula 1, M includes at least one of is Co, Na, Ca, Y, Hf, Ta, Fe, B, Si, Ba, Ra, Mg, V, Ti, Al, Ru, Zr, W, Sn, Nb, Mo, Cu, Zn, Cr, Ga and Bi, $0 \leq x \leq 0.9$, $0 \leq y \leq 0.9$, $x+y>0$, $0.1 \leq z \leq 0.9$, $1.8 \leq a+x+y+z \leq 2.2$, $1.05 \leq a/(x+y+z) \leq 1.95$ and $1.8 \leq b \leq 2.2$.

In some embodiments, $1.2 \leq a/(x+y+z) \leq 1.8$ in Chemical Formula 1.

A cathode according to embodiments of the present disclosure includes a cathode active material including lithium metal oxide particles containing an excessive lithium. Thus, lithium may exist in a transition metal layer of a layered structure of the lithium metal oxide particle. Accordingly, capacity properties of the cathode active material may be improved.

In example embodiments, a lithium secondary battery includes a non-aqueous electrolyte solution. A non-aqueous organic solvent of the non-aqueous electrolyte solution includes a fluorine-based organic solvent within a desired content range. Accordingly, an oxidation resistance of the non-aqueous electrolyte solution may be improved, life-span properties of the lithium secondary battery may be improved, and a resistance reduction due to repeated charging and discharging may be suppressed.

The lithium secondary battery of the present disclosure may be widely applied in green technology fields such as an electric vehicle, a battery charging station, solar power generation wind power generation using other batteries, etc. The lithium secondary battery according to the present disclosure may be used for eco-friendly electric vehicles and hybrid vehicles to prevent a climate change by suppressing air pollution and greenhouse gas emissions. etc.

## BRIEF DESCRIPTION OF THE DRAWINGS

FIGS. 1 and 2 are a schematic plan view and a schematic cross-sectional view, respectively, illustrating a lithium secondary battery in accordance with exemplary embodiments.

## DETAILED DESCRIPTION OF THE EMBODIMENTS

Hereinafter, a lithium secondary battery according to embodiments of the present disclosure will be described in more detail with reference to experimental examples and accompanying drawings. However, those skilled in the art will appreciate that such embodiments are provided to further understand the spirit of the present invention and do not limit subject matters to be protected as disclosed in the detailed description and appended claims.

In example embodiments, a lithium secondary battery includes a cathode, an anode facing the cathode, and a non-aqueous electrolyte solution.

The detailed structure of the lithium secondary battery will be described later with reference to FIGS. 1 and 2.

In example embodiments, the cathode includes a cathode active material including lithium metal oxide particles containing an excess amount of lithium. For example, lithium may exist in a transition metal layer of a layered structure of the lithium metal oxide particle. Accordingly, capacity properties of the cathode active material may be increased to a similar level of a theoretical capacity of the layered structure (250 mAh/g).

A ratio of the number of moles of lithium contained in the lithium metal oxide particle relative to the total number of moles of metal excluding lithium contained in the lithium metal oxide particle is 1.05 or more. Within the above range, lithium may sufficiently exist in the transition metal layer in addition to a lithium layer in the layered structure of the lithium metal oxide particle.

In some embodiments, the lithium metal oxide particles may include a layered structure or a crystal structure represented by Chemical Formula 1 below.

[Chemical Formula 1] $Li_a[M_xNi_yMn_z]O_b$

In Chemical Formula 1, M may include at least one of Co, Na, Ca, Y, Hf, Ta, Fe, B, Si, Ba, Ra, Mg, V, Ti, Al, Ru, Zr, W, Sn, Nb, Mo, Cu, Zn, Cr, Ga and Bi, $0 \le x \le 0.9$, $0 \le y \le 0.9$, $x+y>0$, $0.1 \le z \le 0.9$, $1.8 \le a+x+y+z \le 2.2$, $1.05 \le a/(x+y+z) \le 1.95$ and $1.8 \le b \le 2.2$.

In some embodiments, in Chemical Formula 1, $1.2 \le a/(x+y+z) \le 1.8$. For example, $a/(x+y+z)$ may refer to the number of moles of lithium contained in the lithium metal oxide particle relative to the total number of moles of transition metals contained in the lithium metal oxide particle.

In the $a/(x+y+z)$ range, a sufficient amount of lithium may be present in the transition metal layer, so that capacity properties may be improved while suppressing excessive reduction of the number of moles of the transition metal.

The chemical structure represented by Chemical Formula 1 indicates a bonding relationship included in the layered structure or the crystal structure of the lithium metal oxide particle, and is not intended to exclude another additional element. For example, M, Ni and Mn in Chemical Formula 1 may serve as main active elements of the cathode active material. Chemical Formula 1 is provided to express the bonding relationship of the main active elements, and is to be understood as a formula encompassing introduction and substitution of the additional element.

In an embodiment, an auxiliary element for enhancing chemical stability of the lithium metal oxide particle or the layered structure/crystal structure may be further included in addition to the main active element. The auxiliary element may be incorporated into the layered structure/crystal structure to form a bond, and it is to be understood that this case is also included within the chemical structure represented by Chemical Formula 1.

For example, the auxiliary elements may include at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

In example embodiments, the cathode active material containing the above-described lithium metal oxide particles may be operated at a high voltage of 4.5 V or more. For example, the lithium metal oxide particles having the composition of Chemical Formula 1 may be activated under a high voltage environment of 4.5 V or more. However, when operating the lithium secondary battery in the high voltage environment, the non-aqueous electrolyte solution may be decomposed and an amount of gas generation may be increased. Accordingly, life-span properties and driving stability of the lithium secondary battery may be degraded.

In example embodiments, the lithium secondary battery includes a non-aqueous electrolyte solution. For example, the non-aqueous electrolyte solution includes a non-aqueous organic solvent and a lithium salt. The non-aqueous organic solvent includes a fluorine-based organic solvent. An oxidation resistance of the non-aqueous electrolyte solution may be improved by the fluorine-based organic solvent, thereby improving the life-span properties of the lithium secondary battery and reducing a rate of resistance increase due to repeated charging and discharging.

A content of the fluorine-based organic solvent is in a range from 5 volume percent (vol%) to 60 vol% based on a total volume of the non-aqueous organic solvent. In some embodiments, the content of the fluorine-based organic solvent may be in a range from 20 vol% to 40 vol%. Within the above range, an ion conductivity may be enhanced while sufficiently improving the oxidation resistance of the non-aqueous electrolyte solution.

In some embodiments, the fluorine-based organic solvent may include at least one selected from the group consisting of a difluoro-based organic solvent and a trifluoro-based organic solvent. Accordingly, the oxidation resistance of the non-aqueous electrolyte solution may be further improved by sufficiently containing fluorine ions.

In example embodiments, the difluoro-based organic solvent may be represented by Chemical Formula 2 below.

[Chemical Formula 2]

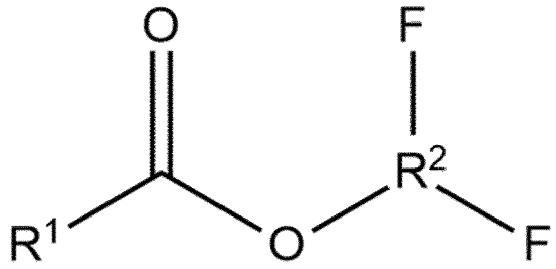

In Chemical Formula 2, $R^1$ represents a hydrocarbon containing a $C_1$-$C_6$ alkyl group or a $C_6$-$C_{12}$ aryl group, and $R^2$ represents a hydrocarbon containing a $C_1$-$C_6$ alkyl group or a $C_1$-$C_6$ alkenyl group.
In an embodiment, the difluoro-based organic solvent may include 2,2-difluoroethyl acetate (DFEA).
In example embodiments, the trifluoro-based organic solvent may be represented by Chemical Formula 3 below.

[Chemical Formula 3]

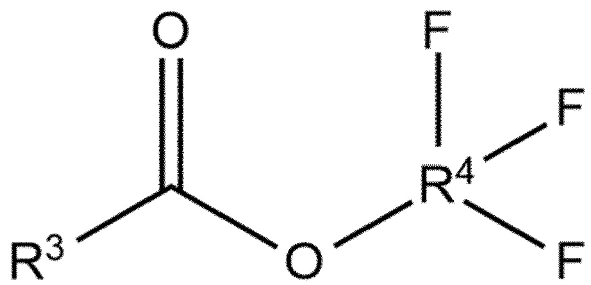

In Chemical Formula 3, $R^3$ represents a hydrocarbon containing a $C_1$-$C_6$ alkyl group or a $C_6$-$C_{12}$ aryl group, and $R^4$ represents a hydrocarbon containing a $C_1$-$C_6$ alkyl group or a $C_1$-$C_6$ alkenyl group.
In an embodiment, the trifluoro-based organic solvent may include 2,2,2-trifluoroethyl acetate (TFEA).
In some embodiments, $R^1$ to $R^4$ in Chemical Formulae 2 and 3 may each be substituted or unsubstituted. For example, at least one of $R^1$ to $R^4$ in Chemical Formulae 2 and 3 may include a substituent.
For example, the substituent included in $R^1$ to $R^4$ in Chemical Formulae 2 and 3 may include at least one selected from the group consisting of halogen, a $C_1$-$C_6$ alkyl group, a $C_3$-$C_6$ cycloalkyl group, a $C_1$-$C_6$ alkoxy group, a 3 to7 membered heterocycloalkyl group, a $C_6$-$C_{12}$ aryl group, a 5 to 7 membered heteroaryl group, s hydroxy group (-OH), $-NR^5R^6$ ($R^5$ and $R^6$ are each independently hydrogen or a $C_1$-$C_6$ alkyl group), a nitro group ($-NO_2$) and a cyano group (-CN).
The term "$C_{n1}$-$C_{n2}$" used herein describes that the number of carbon atoms is from n1 to n2.
In some embodiments, the non-aqueous organic solvent may further include a linear carbonate-based compound. Accordingly, structural and chemical stability of the non-aqueous electrolyte solution may be improved.
For example, the linear carbonate-based compounds may include at least one selected from the group consisting of dimethyl carbonate (DMC), diethyl carbonate (DEC), dipropyl carbonate (DPC), ethylmethyl carbonate (EMC), methylpropyl carbonate (MPC) and ethylpropyl carbonate (EPC).
In some embodiments, the non-aqueous organic solvent may further include a cyclic carbonate-based compound.
For example, the cyclic carbonate-based compound may include at least one selected from the group consisting of propylene carbonate (PC) and gamma-butyrolactone (GBL).
For example, fluoroethylene carbonate (FEC) and ethylene carbonate (EC) may be easily decomposed in the high voltage environment.
In some embodiments, a total content of FEC and EC contained in the non-aqueous organic solvent may be 5 vol% or less based on a total volume of the non-aqueous organic solvent. Within the above content range, the content of FEC and EC decomposed in the high voltage environment may be reduced, so that the life-span properties during high voltage charging and discharging may be improved.
In example embodiments, the lithium salt may serve as an electrolyte. For example, the lithium salt may be

expressed as $Li^+X^-$.

For example, an anion (X-) of the lithium salt may be $F^-$, $Cl^-$, $Br^-$, $I^-$, $NO_3^-$, $N(CN)_2^-$, $BF_4^-$, $ClO_4^-$, $PF_6^-$, $SbF_6^-$, $AsF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$ and $PO_2F_2^-$. These may be used alone or in a combination thereof.

In some embodiments, the lithium salt may include at least one selected from the group consisting of lithium tetrafluoroborate ($LiBF_4$), lithium hexafluorophosphate ($LiPF_6$) and lithium difluorophosphate ($LiPO_2F_2$). In this case, a film having an enhanced thermal stability may be formed on an electrode surface. Accordingly, the ionic conductivity and electrode protection properties of the non-aqueous electrolyte solution may be improved.

In some embodiments, the lithium salt may be included in a concentration from about 0.01M to 5M, e.g., from about 0.01M to 2M based on the non-aqueous organic solvent. Within the above range, transfer of lithium ions and/or electrons may be promoted during charging and discharging of the lithium secondary battery, thereby improving power properties.

Referring to FIGS. 1 and 2 are a schematic plan view and a cross-sectional view, respectively, of a lithium secondary battery according to example embodiments. FIG. 2 is a cross-sectional view taken along a line I-I' of FIG. 1.

The secondary battery of FIGS. 1 and 2 is a schematic example illustrated for convenience of descriptions, and the secondary battery provided in the present disclosure is not limited to the construction of FIGS. 1 and 2.

Referring to Figures 1 and 2, a lithium secondary battery includes a cathode 100 that includes the cathode active material containing the lithium metal oxide particles according to the above-described embodiments and an anode 130 facing the cathode 100.

The cathode 100 may include a cathode active material layer 110 formed by applying the cathode active material containing the above-described lithium metal oxide particles on a cathode current collector 105.

For example, a cathode slurry may be prepared by mixing and stirring the cathode active material with a binder, a conductive material, and/or a dispersive agent in a solvent. The cathode slurry may be coated on at least one surface of the cathode current collector 105, and then dried and pressed to obtain the cathode 100.

The cathode current collector 105 may include stainless steel, nickel, aluminum, titanium, or an alloy thereof. The cathode current collector 105 may include aluminum or stainless steel surface-treated with carbon, nickel, titanium or silver. For example, a thickness of the cathode current collector 105 may be in a range from 10 $\mu$m to 50 $\mu$m.

The binder may include an organic binder such as vinylidene fluoride-hexafluoropropylene copolymer (PVDF-co-HFP), polyvinylidenefluoride (PVDF), polyacrylonitrile, polymethylmethacrylate, etc., or an aqueous binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may be included to promote an electron movement between active material particles. For example, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

The anode 130 may include an anode current collector 125 and an anode active material layer 120 formed on at least one surface of the anode current collector 125.

The anode active material may include a material capable of intercalating and deintercalating lithium ions which may be widely used in the related art without a particular limitation. For example, a carbon-based material such as a crystalline carbon, an amorphous carbon, a carbon complex or a carbon fiber, a lithium alloy, silicon or tin may be used as the anode active material.

The amorphous carbon may include a hard carbon, cokes, a mesocarbon microbead (MCMB) fired at a temperature of 1500 °C or less, a mesophase pitch-based carbon fiber (MPCF), etc. The crystalline carbon may include a graphite-based material such as natural graphite, artificial graphite, graphitized cokes, graphitized MCMB, graphitized MPCF, etc. The lithium alloy may further include aluminum, zinc, bismuth, cadmium, antimony, silicon, lead, tin, gallium, indium, etc.

For example, the anode current collector 125 may include a copper foil, a nickel foil, a stainless steel foil, a titanium foil, a nickel foam, a copper foam, or a polymer substrate coated with a conductive metal. These may be used alone or in a combination thereof. For example, a thickness of the anode current collector 125 may be in a range from 10 $\mu$m to 50 $\mu$m.

In some embodiments, a slurry may be prepared by mixing and stirring the anode active material with a binder, a conductive material and/or a dispersive agent in a solvent. The slurry may be coated on at least one surface of the anode current collector, and then dried and pressed to form the anode 130.

The binder and the conductive material substantially the same as or similar to those mentioned above may be used in the anode 130. In some embodiments, the binder for forming the anode 130 may include an aqueous binder

such as styrene-butadiene rubber (SBR) for a compatibility with, e.g., the carbon-based active material, and carboxymethyl cellulose (CMC) may also be used as a thickener.

A separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separation layer 140 may also include a non-woven fabric formed from a glass fiber with a high melting point, a polyethylene terephthalate fiber, etc.

In example embodiments, an electrode cell is defined by the cathode 100, the anode 130 and the separation layer 140, and a plurality of the electrode cells may be repeatedly arranged to form an electrode assembly 150 having, e.g., a jelly-roll shape. In some embodiments, the electrode assembly 150 may be fabricated by winding, stacking, z-folding, stack-folding of the separation layer 140.

The electrode assembly 150 may be accommodated together with the non-aqueous electrolyte solution in a case 160 to obtain the lithium secondary battery.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a square shape, a pouch shape or a coin shape.

Hereinafter, examples are proposed to more concretely describe the present disclosure.

Example 1

(1) Preparation of cathode active material

Distilled water from which dissolved oxygen was removed was added to a close-type reactor, and $NiSO_4 \cdot 6H_2O$ and $MnSO_4 \cdot H_2O$ were added in a molar ratio of 38.1:61.9.

NaOH as a precipitating agent and $NH_4OH$ as a chelating agent were additionally added to the reactor, and a co-precipitation reaction proceeded for 60 hours to prepare metal hydroxide particles.

The metal hydroxide particles were dried at 100°C for 12 hours.

The dried metal hydroxide particles and lithium hydroxide were added to a dry mixer to prepare a mixture.

A mixing ratio of the metal hydroxide particles and lithium hydroxide was adjusted to satisfy a composition of prepared lithium metal oxide particles according to an inductively coupled plasma (ICP) analysis of $Li_{1.11}Ni_{0.34}Mn_{0.55}O_2$.

The ICP analysis was performed using 5800 ICP-OES device manufactured by Agilent.

The mixture was placed in a firing furnace, a temperature of the firing furnace was increased to 250°C at a ramping rate of 2°C/min, and maintained at 250°C for 3 hours (a first firing).

After the first firing, a temperature of the furnace was increased to 850°C at a rate of 2°C/min, and a second firing was performed while maintaining the temperature at 850°C for 8 hours.

Oxygen gas was continuously passed through the furnace at a flow rate of 10 mL/min during the first and second firings.

The fired product was naturally cooled to room temperature, pulverized and classified to produce the lithium metal oxide particles.

The production of $Li_{1.11}Ni_{0.34}Mn_{0.55}O_2$ was confirmed by an ICP analysis on the lithium metal oxide particles using a normalization of the number of oxygen atoms to 2.

The prepared lithium metal oxide particles were used as a cathode active material.

(2) Preparation of non-aqueous electrolyte solution

A non-aqueous electrolyte solution was prepared by dissolving $LiPF_6$ at a concentration of 1.0 M in a mixed solvent of PC/EMC/DFEA/FEC (21:45:30:4; volume ratio).

(3) Fabrication of lithium secondary battery

A lithium secondary battery was manufactured using the prepared cathode active material and the non-aqueous electrolyte solution.

Specifically, a cathode slurry was prepared by mixing the prepared cathode active material, Denka Black as a conductive material and PVDF as a binder in a mass ratio of 93:5:2, respectively. The cathode slurry was coated on an aluminum current collector (thickness: 15 μm), vacuum dried at 130°C, and then pressed to prepare a cathode.

A lithium metal (a Li metal) having a thickness of 15 μm was used as an anode.

The cathode and the anode manufactured as described above were notched in a circular shape with diameters of Φ14 and Φ16, respectively, and stacked to form an electrode cell by interposing a separator (polyethylene, thickness 13 μm) notched by Φ19 between the cathode and the anode. The electrode cell was placed in a coin cell exterior material having a diameter of 20 mm and a height of 1.6 mm, assembled with the electrolyte solution injected therein, and then aged for more than 12 hours so that the electrolyte solution impregnated insides of the electrodes.

A formation charging/discharging was performed for the above-fabricated lithium secondary battery (charging conditions: CC-CV 1C 4.6V 0.05C CUT-OFF, discharging conditions: CC 1C 2.0V CUT-OFF).

Examples 2 to 9

A cathode active material, a non-aqueous electrolyte solution and a lithium secondary battery were prepared by the same methods as those in Example 1, except that the composition of the non-aqueous organic solvent was adjusted as shown in Table 1 below.

Example 10

A cathode active material, a non-aqueous electrolyte solution and a lithium secondary battery were prepared by the same methods as those in Example 1, except that input amounts of $LiOH·H_2O$, $NiSO_4·6H_2O$, $CoSO_4·7H_2O$ and $MnSO_4·H_2O$ were adjusted so that the composition of the lithium metal oxide particles was $Li_{1.19}Ni_{0.21}Co_{0.02}Mn_{0.58}O_2$.

Comparative Examples 1 to 3

A cathode active material, a non-aqueous electrolyte solution and a lithium secondary battery were prepared by the same methods as those in Example 1, except that the composition of the non-aqueous organic solvent was adjusted as shown in Table 1 below.

Comparative Example 4

A cathode active material, a non-aqueous electrolyte solution and a lithium secondary battery were prepared by the same methods as those in Example 1, except that input amounts of $LiOH·H_2O$, $NiSO_4·6H_2O$, and $MnSO_4·H_2O$ were adjusted so that the composition of the lithium metal oxide particles was $Li_{1.02}Ni_{0.38}Mn_{0.60}O_2$.

The composition (chemical formula) of the cathode active material, a ratio of the number of moles of lithium contained in the lithium metal oxide particles based on the total number of moles of metals excluding lithium contained in the lithium metal oxide particles (Li/Me), and the composition (volume ratio) of the non-aqueous electrolyte solvent are shown in Table 1 below.

[Table 1]

| No. | cathode active material | | non-aqueous organic solvent composition (volume ratio) |
|---|---|---|---|
| | composition (chemical formula) | Li/Me | |
| Example 1 | $Li_{1.11}Ni_{0.34}Mn_{0.55}O_2$ | 1.25 | PC:EMC:DFEA:FEC (21:45:30:4) |
| Example 2 | $Li_{1.11}Ni_{0.34}Mn_{0.55}O_2$ | 1.25 | PC:EMC:TFEA:FEC (21:45:30:4) |
| Example 3 | $Li_{1.11}Ni_{0.34}Mn_{0.55}O_2$ | 1.25 | PC:EMC:DFEA:FEC (21:65:10:4) |
| Example 4 | $Li_{1.11}Ni_{0.34}Mn_{0.55}O_2$ | 1.25 | PC:EMC:DFEA:FEC (21:55:20:4) |
| Example 5 | $Li_{1.11}Ni_{0.34}Mn_{0.55}O_2$ | 1.25 | PC:EMC:DFEA:EC (21:35:40:4) |
| Example 6 | $Li_{1.11}Ni_{0.34}Mn_{0.55}O_2$ | 1.25 | PC:EMC:DFEA:FEC (21:25:50:4) |
| Example 7 | $Li_{1.11}Ni_{0.34}Mn_{0.55}O_2$ | 1.25 | PC:EMC:DFEA:FEC (21:15:60:4) |
| Example 8 | $Li_{1.11}Ni_{0.34}Mn_{0.55}O_2$ | 1.25 | PC:EMC:DFEA (21:49:30) |
| Example 9 | $Li_{1.11}Ni_{0.34}Mn_{0.55}O_2$ | 1.25 | PC:EMC:DFEA:FEC (19:45:30:6) |
| Example 10 | $Li_{1.19}Ni_{0.21}Co_{0.02}Mn_{0.58}O_2$ | 1.47 | PC:EMC:DFEA:FEC (21:45:30:4) |

(continued)

| No. | cathode active material | | non-aqueous organic solvent composition (volume ratio) |
|---|---|---|---|
| | composition (chemical formula) | Li/Me | |
| Comparative Example 1 | $Li_{1.11}Ni_{0.34}Mn_{0.55}O_2$ | 1.25 | EC:EMC:DEC (25:45:30) |
| Comparative Example 2 | $Li_{1.11}Ni_{0.34}Mn_{0.55}O_2$ | 1.25 | PC:EMC:DFEA:FEC (21:71:4:4) |
| Comparative Example 3 | $Li_{1.11}Ni_{0.34}Mn_{0.55}O_2$ | 1.25 | PC:EMC:DFEA:FEC (21:13:62:4) |
| Comparative Example 4 | $Li_{1.02}Ni_{0.38}Mn_{0.60}O_2$ | 1.04 | PC:EMC:DFEA:FEC (21:45:30:4) |

Experiment Example

(1) Evaluation on capacity retention (45°C)

Charging (CC/CV 1C 4.6V 0.05C CUT-OFF) and discharging (CC 1C 2.0V CUT-OFF) of the lithium secondary battery according to each of Examples and Comparative Examples were repeated 100 times in a chamber at 45°C.
A capacity retention was calculated as a percentage of a discharge capacity measured at the 100th cycle relative to a discharge capacity at the first cycle.
Capacity retention (%) = (discharge capacity at 100th cycle/discharge capacity at 1st cycle) × 100

(2) Evaluation on resistance increase ratio (45°C)

For each lithium secondary battery of Examples and Comparative Examples, a surface resistance of the cathode was measured as follows to evaluate a resistance increase ratio.
Specifically, two lithium secondary battery were prepared from each of Examples and Comparative Examples (hereinafter, the two lithium secondary batteries are referred to as a first battery and a second battery).
The first battery was placed in a 45°C chamber, charged at a C-rate of 1 C in a voltage range from 2.0 V to 4.3 V and discharged at a C-rate of 1 C. The charge and discharge were repeated 100 times.
After completing the charging and discharging, an electrochemical impedance of the first battery was measured using a potentiostat (Biologic, VMP-3), and a surface resistance (Rct1) of the cathode was measured.
The second battery was placed in a 45°C chamber, charged at a C-rate of 1 C in a voltage range from 2.0 V to 4.6 V and discharged at a C-rate of 1 C. The charge and discharge were repeated 100 times.
After completing the charging and discharging, an electrochemical impedance of the second battery was measured with the potentiostat, and a surface resistance (Rct2) of the cathode was measured.
According to Equation 1 below, a ratio of the cathode surface resistance (Rct2) in a cycle of the voltage section from 2.0 V to 4.6 V to the cathode surface resistance (Rct1) in a cycle of the voltage section from 2.0 V to 4.3 V was calculated as a percentage to obtain the resistance increase ratio (%).

[Equation 1]

$$\text{Resistance increase ratio (\%)} = (\text{Rct2}/\text{Rct1}) \times 100$$

(3) Measurement of initial discharge capacity

Charging (CC/CV 0.1C 4.6V 0.05C CUT-OFF) and discharging (CC 0.1C 2.0V CUT-OFF) were performed once for the lithium secondary battery according to each of Examples and Comparative Examples, and then an initial discharge capacity was measured.
The initial discharge capacity is defined as a value obtained by dividing an absolute capacity (mAh) of the lithium secondary battery by a total weight (g) of the cathode active material in the battery.
The evaluation results are shown in Table 2 below.

[Table 2]

| No. | capacity retention (45°C) (%, 100cyc) | resistance increase ratio (45°C) (%) | initial discharge capacity (mAh/g) |
|---|---|---|---|
| Example 1 | 92 | 105 | 210 |
| Example 2 | 90 | 108 | 210 |
| Example 3 | 88 | 114 | 210 |
| Example 4 | 89 | 112 | 210 |
| Example 5 | 92 | 105 | 210 |
| Example 6 | 93 | 108 | 210 |
| Example 7 | 92 | 110 | 210 |
| Example 8 | 94 | 104 | 210 |
| Example 9 | 86 | 121 | 210 |
| Example 10 | 91 | 107 | 247 |
| Comparative Example 1 | 63 | 142 | 210 |
| Comparative Example 2 | 79 | 135 | 210 |
| Comparative Example 3 | 84 | 144 | 210 |
| Comparative Example 4 | 92 | 110 | 140 |

Referring to Tables 1 and 2, in Examples where the content of the fluorine-based organic solvent was in a range from 5 vol% to 60 vol% based on the total volume of the non-aqueous organic solvent, the capacity retention was increased while suppressing the resistance increase ratio in a high voltage environment compared to those from Comparative examples. Additionally, in Examples, improved capacity properties were secured by using the over-lithiated cathode active material.

In Example 9 where the FEC content exceeded 5 vol% based on the total volume of the non-aqueous organic solvent, side reactions of the electrolyte were increased to degrade the capacity retention of the lithium secondary battery relatively to those from other Examples.

In Comparative Example 4 where the ratio of the number of moles of lithium contained in the lithium metal oxide particles to the total number of moles of metals excluding lithium contained in the lithium metal oxide particles was less than 1.05, an amount of lithium present in the transition metal layer of the layered structure was decreased to deteriorate the initial capacity.

## Claims

**1.** A lithium secondary battery, comprising:

a cathode comprising a cathode active material that contains lithium metal oxide particles;
an anode facing the cathode; and
a non-aqueous electrolyte solution comprising a non-aqueous organic solvent that contains a fluorine-based organic solvent, and a lithium salt,
wherein a ratio of the number of moles of lithium contained in each of the lithium metal oxide particles relative to the total number of moles of metals excluding lithium contained in each of the lithium metal oxide particles is 1.05 or more, and
a content of the fluorine-based organic solvent is in a range from 5 vol% to 60 vol% based on a total volume of the non-aqueous organic solvent.

2. The lithium secondary battery according to claim 1, wherein the fluorine-based organic solvent includes at least one selected from the group consisting of a difluoro-based organic solvent and a trifluoro-based organic solvent.

3. The lithium secondary battery according to claim 2, wherein the difluoro-based organic solvent is represented by Chemical Formula 2:

[Chemical Formula 2]

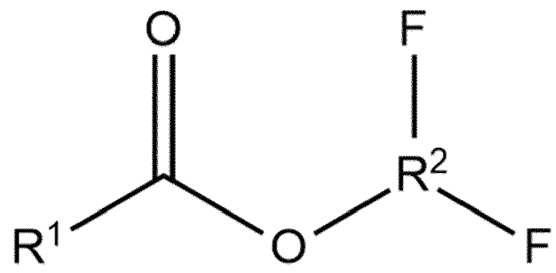

wherein, in Chemical Formula 2, $R^1$ represents a hydrocarbon containing a $C_1$-$C_6$ alkyl group or a $C_6$-$C_{12}$ aryl group, and $R^2$ represents a hydrocarbon containing a $C_1$-$C_6$ alkyl group or a $C_1$-$C_6$ alkenyl group.

4. The lithium secondary battery according to claim 3, wherein the difluoro-based organic solvent includes 2,2-difluoroethyl acetate.

5. The lithium secondary battery according to any one of claims 2 to 4, wherein the trifluoro-based organic solvent is represented by Chemical Formula 3:

[Chemical Formula 3]

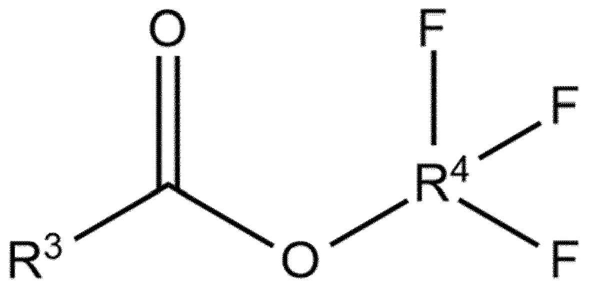

wherein, in Chemical Formula 3, $R^3$ represents a hydrocarbon containing a $C_1$-$C_6$ alkyl group or a $C_6$-$C_{12}$ aryl group, and $R^4$ represents a hydrocarbon containing a $C_1$-$C_6$ alkyl group or a $C_1$-$C_6$ alkenyl group.

6. The lithium secondary battery according to claim 5, wherein the trifluoro-based organic solvent includes 2,2,2-trifluoroethyl acetate.

7. The lithium secondary battery according to any one of claims 1 to 6, wherein the lithium salt includes at least one selected from the group consisting of lithium tetrafluoroborate ($LiBF_4$), lithium hexafluorophosphate ($LiPF_6$) and lithium difluorophosphate ($LiPO_2F_2$). .

8. The lithium secondary battery according to any one of claims 1 to 7, wherein a total content of fluoroethylene carbonate and ethylene carbonate contained in the non-aqueous organic solvent is 5 vol% or less based on a total volume of the non-aqueous organic solvent.

9. The lithium secondary battery according to any one of claims 1 to 8, wherein the content of the fluorine-based organic solvent is in a range from 20 vol% to 40 vol% based on the total volume of the non-aqueous organic solvent.

**10.** The lithium secondary battery according to any one of claims 1 to 9, wherein the lithium metal oxide particles are represented by Chemical Formula 1:

[Chemical Formula 1] $Li_a[M_xNi_yMn_z]O_b$

wherein, in Chemical Formula 1, M includes at least one of is Co, Na, Ca, Y, Hf, Ta, Fe, B, Si, Ba, Ra, Mg, V, Ti, Al, Ru, Zr, W, Sn, Nb, Mo, Cu, Zn, Cr, Ga and Bi, $0 \leq x \leq 0.9$, $0 \leq y \leq 0.9$, $x+y>0$, $0.1 \leq z \leq 0.9$, $1.8 \leq a+x+y+z \leq 2.2$, $1.05 \leq a/(x+y+z) \leq 1.95$ and $1.8 \leq b \leq 2.2$.

**11.** The lithium secondary battery according to claim 10, wherein $1.2 \leq a/(x+y+z) \leq 1.8$ in Chemical Formula 1.

FIG. 1

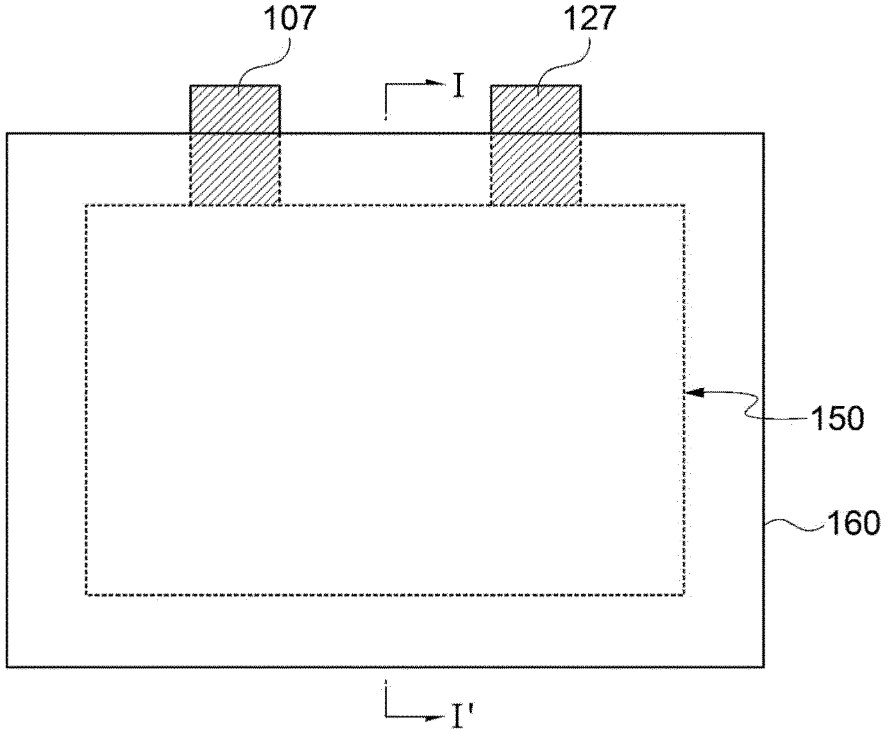


FIG. 2

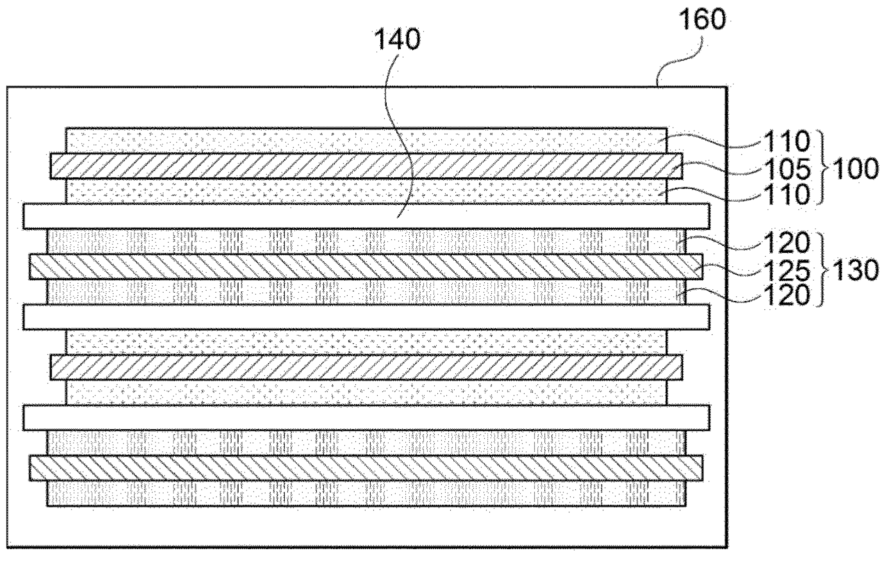

Europäisches Patentamt
European Patent Office
Office européen des brevets

# EUROPEAN SEARCH REPORT

Application Number
EP 23 19 9020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG DEPENG ET AL: "High-Efficiency Electrolyte for Li-Rich Cathode Materials Achieving Enhanced Cycle Stability and Suppressed Voltage Fading Capable of Practical Applications on a Li-Ion Battery", APPLIED MATERIALS & INTERFACES, vol. 12, no. 44, 20 October 2020 (2020-10-20), pages 49666-49679, XP093033197, US ISSN: 1944-8244, DOI: 10.1021/acsami.0c14995 | 1,2,5-8, 10,11 | INV. H01M10/0525 H01M4/58 H01M10/0568 H01M10/0569 H01M4/525 |
| Y | * page 49667, right-hand column, last two paragraphs * ----- | 9 | |
| X | US 2019/123337 A1 (HASEGAWA TAKUYA [JP]) 25 April 2019 (2019-04-25) * par. 57, 102, 106 * ----- | 1-4,7 | |
| Y | CN 113 363 586 A (CHINA AUTOMOTIVE BATTERY RES INST CO LTD) 7 September 2021 (2021-09-07) * Example 3 * ----- | 9 | TECHNICAL FIELDS SEARCHED (IPC) H01M |

The present search report has been drawn up for all claims

2

| Place of search | Date of completion of the search | Examiner |
|---|---|---|
| Munich | 6 March 2024 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 19 9020

This annex lists the patent family members relating to the patent documents cited in the above-mentioned European search report. The members are as contained in the European Patent Office EDP file on
The European Patent Office is in no way liable for these particulars which are merely given for the purpose of information.

06-03-2024

| Patent document cited in search report | Publication date | Patent family member(s) | Publication date |
| --- | --- | --- | --- |
| US 2019123337 A1 | 25-04-2019 | CN 108701812 A | 23-10-2018 |
| | | JP 7070400 B2 | 18-05-2022 |
| | | JP WO2017179429 A1 | 21-02-2019 |
| | | US 2019123337 A1 | 25-04-2019 |
| | | WO 2017179429 A1 | 19-10-2017 |
| CN 113363586 A | 07-09-2021 | NONE | |

EPO FORM P0459

For more details about this annex : see Official Journal of the European Patent Office, No. 12/82